(19) Europäisches Patentamt
European Patent Office
Office européen des brevets

(11) **EP 4 081 870 B1**

(12) **EUROPEAN PATENT SPECIFICATION**

(45) Date of publication and mention
of the grant of the patent:
**25.02.2026 Bulletin 2026/09**

(21) Application number: **20830267.9**

(22) Date of filing: **23.12.2020**

(51) International Patent Classification (IPC):
**G05B 19/418** (2006.01)

(52) Cooperative Patent Classification (CPC):
**G05B 17/02; G05B 19/41885;** G05B 2219/32352;
Y02P 90/02

(86) International application number:
**PCT/EP2020/087764**

(87) International publication number:
**WO 2021/130311 (01.07.2021 Gazette 2021/26)**

(54) **COMPUTER-IMPLEMENTED METHOD FOR DETERMINING AN OPTIMAL OPERATIVE STATE OF A PRODUCTION PROCESS OF AN INDUSTRIAL PLANT**

COMPUTERIMPLEMENTIERTES VERFAHREN ZUR BESTIMMUNG EINES OPTIMALEN BETRIEBSZUSTANDES EINES PRODUKTIONSPROZESSES EINER INDUSTRIEANLAGE

PROCÉDÉ DE MISE EN OEUVRE PAR ORDINATEUR POUR DÉTERMINER UN ÉTAT OPÉRATIONNEL OPTIMAL D'UN PROCESSUS DE PRODUCTION D'UNE INSTALLATION INDUSTRIELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2019 EP 19383196**

(43) Date of publication of application:
**02.11.2022 Bulletin 2022/44**

(73) Proprietor: **Moeve, S.A.**
**28046 Madrid (ES)**

(72) Inventor: **MACÍAS HERNÁNDEZ, José Juan**
**38205 San Cristóbal de La Laguna**
**Santa Cruz de Tenerife (ES)**

(74) Representative: **ABG Intellectual Property Law, S.L.**
**Avenida de Burgos, 16D**
**Edificio Euromor**
**28036 Madrid (ES)**

(56) References cited:
**US-A- 6 041 263        US-A1- 2007 135 938**
**US-A1- 2018 181 694**

## Description

Object of the Invention

The present invention relates to a computer-implemented method for the purpose of determining an optimal operative state of a production process of an industrial plant, particularly suitable for an industrial chemical plant.

The method according to the invention comprises modeling the production process by means of a set of sub-processes, among which some of the sub-processes can be provided with a rigid model that can be simulated by a rigorous simulation module, while other sub-processes, given their changing nature or the lack of information about the equations controlling said sub-process, can be modeled by a model of machine learning that can be simulated by a predictive simulation module.

The method also has an application in complex production processes where there may be manual actions that the operator of the plant must take, such as batch operations or operations with changes to the load. In these cases, a set of conditional heuristic rules which include the in-depth knowledge held by an engineer with experience in processes of this type is established.

The method allows simulating this production process by instantiating suitable simulation modules and solving a maximization problem combined with an iterative method which, after convergence, makes the values of the parameters of all the instantiated modules compatible, and returns, among other values, the set of control parameters which, used in the production process, would take it to the optimal operative state.

The method allows operating in simulation mode, determining the optimal conditions in response to a given set point value, and also in control mode where the parameters are applied to the industrial plant, taking the production process to the values providing the pre-established optimal conditions.

As indicated, this simulation can be helped by the set of pre-established rules of action having a conditional application on the production process based on the diagnosis during or after the simulation of any of the sub-processes.

The method allows scaling the solution and is adaptable to different configurations so as to cover the range of existing complex chemical engineering production processes when considering, in an integrated manner, for example, the possible inexistence of a rigorous model of a plant allowing the conditional incorporation of heuristics to the simulation process.

Background of the Invention

One of the fields of the art with the most intensive development is the industrial process modeling field.

Throughout the document, "sub-process" is to be understood as a part of the production process comprising a set of activities from among those taking place in an industrial plant. When an industrial process is complex, an effective way to approach its study and analysis consists of analyzing parts of same where the number of variables is smaller and where the set of physical and/or thermodynamic phenomena is also more limited, so it is possible to more readily identify the laws which control its behavior without having to approach the whole problem.

One of the greatest interests of engineers, physicists, and chemists is gaining in-depth knowledge of each of the phenomena and sub-processes involved in the industrial process which occur in a production plant, establishing physical and mathematical models which link relevant parameters characterizing said process or sub-process. Mathematical modeling entails the identification of equations which determine the behavior of the system under study, and particularly allows, for example, determining output variables depending on input variables and possibly others that are characteristic of the process.

Throughout the description, use will be made of the term "production parameters" in reference to those measurable variables in a production process or sub-process. An example of such production parameters would be those formed by variables such as flow, temperature, or pressure in a conduit or chamber. It will be understood that the measurement of such variables is carried out through transducers capable of providing a signal that is proportional to the measured variable and can subsequently be treated through a central processing unit, for example.

Among the production parameters there will be variables which can be read by means of transducers and others which will be predicted by the model. The former will be identified as input production parameters and the latter will be identified as output production parameters. This applies for any type of model described hereinafter.

Likewise, those variables which are imposed on the production process or sub-process will be distinguished as "control parameters". These values are encoded through a signal taken to an actuator or active element capable of imposing said value. An example of a control parameter is flow. In this case, the actuator is a valve which adapts the degree of aperture such that the set point flow is established. Another example is temperature, where in this case the actuator is a resistor with its control means which manage the amount of energy introduced in said resistor also so as to reach the imposed set point temperature.

The use of an optimization system of a production process based on the use of a mathematical model which determines the behavior of the physical entity, the production process, thereby entails a reading of real production parameters inputted as data imposed on the mathematical model, and a simulation which allows predicting other production parameters. The action on the sub-process is carried out by modifying any of its parameters, the control parameters.

The optimization of a process entails the definition of a variable to be optimized as the target and a strategy of varying parameters of the production process which can be actuated through the control parameters which make the production process evolve until it achieves the target.

Use is commonly made of variables to be optimized based on production terms, for example production of a given hydrocarbon. The higher the amount of hydrocarbon, the higher the production is obtained. Other parameters can also include quality criteria of the hydrocarbon for one and the same level of production.

Therefore, an optimization process is a process which takes the operative mode of the plant to a set of production parameters such that the industrial plant is intended to operate in an optimal mode. In some cases, the level of production is economically quantifiable and there is a direct and proportional relationship between the level of production and the economic amount. Nevertheless, this assertion is not incompatible with the idea that, in any of the cases, the search for an optimal may give rise to an optimization of the production process.

Without getting into the optimization technique, methods of this type have the limitation of requiring knowledge of all the laws of behavior involved in the production process, physical laws such as balances of mass, energy, heat transfer, etc., and other thermodynamic and/or chemical laws, especially when there are chemical reactions.

These processes can be so complex that it is possible that there are no mathematical models available which are capable of explaining the complete behavior of the process or sub-process.

Models of this type will generically be identified as rigid models since once the equations which control the behavior are established, said behavior is limited to the starting equations and hypothesis on the basis of which the model has been constructed.

Models of machine learning based, for example, on the use of neural networks, are used extensively at present. Said networks require two phases, i.e., a first phase of learning in which historical input and output data of a production process or sub-process is used to train the model, and a second later phase of use where the learning model has already identified behavioral patterns and is capable of providing outputs depending on inputs by applying such behavioral patterns.

The historical data to be used in models of this type can be real data of the plant or can come from simulations, for example using rigid models.

Models of machine learning of this type present advantages and drawbacks with respect to rigid models of equations. Among the clearest advantages is that it is not necessary to deduce the equations controlling a sub-process or even to understand the physical, chemical, and thermodynamic mechanisms for the model to work. It is sufficient to identify, for example, the most relevant variables which allow establishing suitable control of the process.

Among the drawbacks, models of machine learning do not provide information about situations not related to the conditions for which they have been trained, so their reliability may drop or even fail.

Likewise, these models have the limitation that they themselves are incapable of identifying which control parameters are to be selected for suitably modeling a process or sub-process since they do not require in-depth knowledge of the sub-process.

Both models additionally present other problems such as those which occur in a real production process, and it is impossible to include transient situations of all types characteristic of the manual action, for example, due to the change in the loading rate of the production process or safety requirements, to name just an example. Many times it is the experience and expertise of engineers, chemists, and physicists, those skilled in the art who are operating on the industrial plant, that allows establishing suitable control parameters which not only prevent unsafe situations but which also favor operating modes closer to being optimal.

Nor are there known any control techniques which allow combining the goodness of the described methods such that they are compatible and the combined benefit of both is obtained. The present invention allows combining the goodness of at least two control methods, which allows varying the behavior of the production process until taking it to optimal conditions.

The present invention also allows operating in simulation mode, such that the control parameters are determined but only used for purposes of knowing the parameters that must be applied to optimize the production process, only being used during simulation; or in control mode, where such parameters are in fact applied to the production process, modifying the real values of the industrial plant, and where the production parameters are read and used in the method.

Description of the Invention

The present invention proposes a solution to the preceding problems by means of a computer-implemented method for determining an optimal operative state of a production process of an industrial plant according to claim 1, a data processing system according to claim 17, and a continuous process management system according to claim 18.

In a first inventive aspect, the invention provides a computer-implemented method for determining an optimal operative state of a production process of an industrial plant by a data processing system for processing data coming from said industrial plant.

According to the invention, the production process can be formed by production sub-processes which do not necessarily correspond to different parts of the overall production process. That is, a production sub-process can comprise steps or elements of another production sub-process. In other words, two different production sub-processes may overlap in the sense that some parts can comprise common parts.

Each of the production sub-processes is modeled by one of the three simulation modules: a) the rigorous simulation module, b) the predictive simulation module, or c) the expert simulation module.

The rigorous simulation module is a model based on equations, and given certain inputs, the input production parameters, it is capable of simulating internal processes through the equations which control said processes, determining the output production parameters.

The predictive simulation module is based on the use of learning algorithms where in response to given inputs, the module is capable of providing the output or outputs after a training process based on pre-existing production data. In this case, the module can also provide one or more control parameters for acting on the sub-process and achieving the set point values at the output.

The third module that is identified is the expert simulation module. This module includes heuristic rules based on the knowledge of one skilled in the art, where there are defined in the rules precise actions based on conditions in the input variables. Although this module can include outputs, the main function is to provide control parameters and actions depending on the heuristic rules when predetermined conditions in its production parameters are met.

The global production process comprises sub-processes, each of which at least simulated by means of a simulation module among the three that have been identified.

Each model of simulation will receive values of production parameters of its sub-process and will provide output parameters which may in turn correspond to input parameters of another simulation module. Likewise, it is possible that two modules can generate two output production parameters for one and the same variable of the production process. It will be checked that said values are compatible upon achieving convergence of a given iterative method as described below.

Also, a given input production parameter of a given model can correspond to a control parameter. In this specific case, the control parameter directly establishes the value of the input parameter of that module.

According to the invention, the method *comprises the steps of:*

> *a) populating at least one rigid model of equations, at least one model of machine learning with the properties of the sub-processes they are modeling and/or the set of pre-established rules of action for those models by modeling the processes and sub-processes;*
> *b) determining a target function the maximum of which coincides with the optimal operative state of the production process and depends on at least one production parameter;*

*c) instantiating two or more of the simulation modules wherein*

> *the first instantiated simulation module models a sub-process with a first set of variables corresponding to production parameters, and the second instantiated simulation module models a sub-process of the industrial plant modeled by a second model different from the first model with a second set of variables corresponding to production parameters;*
> *wherein the rigorous simulation module and the predictive simulation module act on different overlapping sub-processes, and wherein the expert simulation module can act on any of the sub-processes; and*
> *wherein the sub-processes overlap in that at least one production parameter of the production process is common to two or more production parameters of different simulation modules;*

*d) carrying out the simulation of the production process by means of instantiated simulation modules determining the values of the production parameters by applying a iterative process where convergence is reached when:*

> - *the production parameters, a control parameter and a control parameter, when they are common to two or more modules, have a discrepancy error below a pre-established threshold value, and*
> - *the target function reaches a maximum value or at least a pre-established optimal value*

*wherein step d) is carried out by means of two nested iterative processes:*

> - *a first iterative process for optimizing control parameters for determining the values of said parameters for which the target function reaches a maximum value or at least a pre-established optimal value, and*
> - *for each iteration of the first iterative process a second iterative process for determining the production parameters, or a production parameter and a control parameter, when they are common to two or more modules, iterating until the latter have a discrepancy error between the values determined by different simulation modules (A, B, C) below a pre-established threshold value; and*

*e) providing the set of control parameters which determine the optimal operative state generated in the simulation.*

The method comprises three modules: a rigorous simulation module, a predictive simulation module, and an expert simulation module.

The rigorous simulation module allows simulating a rigid model of equations which models at least one part of the production process. The rigid model is thus expressed from a set of variables that can be simulated by means of the rigorous simulation module and can use equations for the balance of matter and/or of balance of energy, and/or thermodynamic data, and/or equations which model known behaviors of sub-processes. In preferred examples of carrying out the invention, the rigorous simulation module is the result of the physical modeling of a given process based on the laws which control its behavior and of possible simplifying hypotheses which determine which equations are the object of simulation, as well as the possible boundary and/or initial conditions.

The predictive simulation module allows simulating models of machine learning which model at least one part of the production process. The model of predictive simulation is thus defined depending on the properties of the sub-process, and it is considered that when it is a model of machine learning according to a preferred example, once it is instantiated, it has a first training step with historical production parameters until it passes to a mode of use in which it provides output production parameters from input production parameters. An even more specific embodiment of a model of machine learning is that based on the use of neural networks, and even more specific is the model which uses several inner layers, and even more specific is the model which uses three input and two output neurons. These embodiments based on neural networks, under use conditions, acquire, simulate, and subsequently predict data.

The expert simulation module receives values of input production parameters and, if the pre-established conditions are met, applies one or more heuristic rules determining values of control parameters.

In a first step, the simulation modules which are finally instantiated are populated with the specific values of the production process to be simulated. An example of values to be populated would be: specific coefficients of materials and properties intervening in the model; for example, for a rigid module of equations, this could be the number of layers of a neuronal network of a model of machine learning and its subsequent training.

The definition of the functional to be optimized can be carried out after or before populating the simulation modules. In this case, the functional depends on one or more production parameters and can also depend on control parameters. Given that this functional must be measurable, the parameters on which it depends must be available in any of the simulation modules or among the control parameters.

Among those examples of greatest interest, the functional to be optimized represents the amount of a given product produced by the industrial plant.

The control parameters are the parameters which modify the conditions of the production process of the industrial plant, so they are variables that can be modified by the optimization method so as to reach the optimal value of the functional.

Every time one or more control parameters is modified, the instantiated simulation modules can be influenced by changes in their input production parameters influenced by the variation of the control parameter or parameters, in turn changing their output production parameters.

The iterative process searches for the situation in which the simulation modules reach convergence of all the production parameters because they are compatible for all the simulation modules. That is, after convergence, parameters which are common to two or more simulation modules, primarily if they are output parameters, take the same value because the conditions reached after convergence for all the modules makes such common values have the same value, hence the use of the term "compatible". During the iterative process, the variation of parameters in turn modifies the parameters of the function to be optimized, so global convergence of the method is achieved when the target function reaches a maximum value or at least a pre-established optimal value, and all the values of the production parameters are compatible in the sense described.

According to one embodiment, the global iterative process of the method of the first inventive aspect is implemented by means of two nested iterative processes, that is, a first iterative process for optimization which modifies control parameters so as to explore the entire search space until finding the control parameters which make the functional reach its maximum or at least a previously determined value considered to be optimal.

Every time the control parameters are modified so as to explore values in the search space, the production parameters will vary or even differ between simulation modules for one and the same variable of the production process. In this case, for each change experienced by a control parameter a second iterative process is established, wherein after convergence the differences in production parameters which correspond to one and the same variable of the production process have an error, i.e. so-called 'discrepancy error', that is smaller than a given amount considering that they are compatible. Discrepancy error is measured as the difference of the variable between consecutive iterations according to a predetermined norm. Examples of norms evaluated on a difference $d_i$ of a set of $i$ variables are the Euclidian

$$\operatorname{norm} \|\cdot\|_2 = \sqrt{\sum_i d_i^2}$$

, the sub-1 norm calculated as the the summation of the absolute value of the differences of the set of variables $\|\cdot\|_1$ or, the sub-infinite norm calculated as the maximum absolute value measured among the differences on set of variables

$$\|\cdot\|_\infty = \max_i |d_i|$$

.

Merely by way of example, this second nested iterative process may consist of simulating with a single simulation module the sub-process which corresponds to it by modifying the output production parameters of said module, which may in turn serve as input for the rest of the simulation modules, while the rest of the simulation modules remain inactive, and continuing with the following simulation module, rendering the rest of them inactive, and so on until executing all the simulation modules. This sequential process is repeated until the production parameters no longer vary or vary with an error that is smaller than a predetermined amount, i.e., the 'discrepancy error'.

In the case of the expert simulation module, the control parameters can be modified automatically if the pre-established conditions are met, so convergence may require further iterations given the changes this module may provoke in the simulated conditions.

By way of summary and according to this embodiment, the first iterative process optimizes the target function by exploring the search space for production parameters, and at each point of the search space of this first production process the second iterative process minimizes the error so that the parameters of the production process are compatible at all times of the optimization process.

Various optimization methods based on searching in the search domain are known and can be applied to the method according to the invention.

After the method reaches convergence on a global level, the control parameters correspond to the parameters to be applied to the production plant for it to operate under the simulated conditions.

According to the first aspect of the invention, the method carries out a simulation without the given control parameters necessarily being used to generate signals which act on the industrial plant. In this case, the method serves for carrying out a simulation of the industrial plant under the new conditions, which allows, for example, an expert user to assess the new conditions.

According to one embodiment of the invention, once the control parameters have been determined, they are used for acting on the industrial plant by changing the operating mode.

According to another embodiment, the expert mode generates control parameters which act on elements for furnishing information to the expert user without said expert user having to necessarily apply them and are only considered to be recommendations. Nevertheless, the method continues operating, also automatically. In this case, the expert module allows diagnosing the evolution of the simulation or of the production plant.

Description of the Drawings

These and other features and advantages of the invention will become apparent based on the following detailed description of a preferred embodiment, given only by way of illustrative and non-limiting example, in reference to the attached drawings.

Figure 1 schematically shows three simulation modules acting on a production process of an industrial plant which in turn comprises two production sub-processes.

Figure 2 schematically shows the variation of a variable over time depending on if the method according to one embodiment is acting on the production process of the plant, which allows observing transient time intervals and steady time intervals.

Detailed Description of the Invention

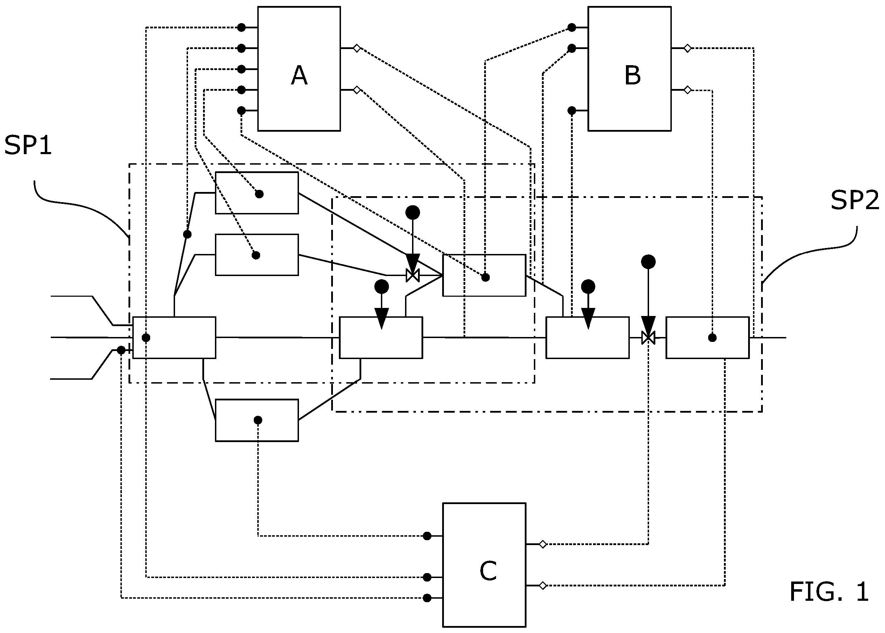

Figure 1 shows an embodiment of the invention of an industrial plant in which at least two sub-processes identified as the first sub-process (SP1) and the second sub-process (SP2) are identified. Both sub-processes are identified by means of a rectangle depicted with a thin dashed line.

The industrial plant comprises three inputs on the left input into a given device or component. Each of the devices or components that are part of the production process is graphically depicted by means of a rectangle. Examples of devices or components include reaction chambers, heat exchangers, separation chambers, etc.

There may be several outputs from one and the same device which are led to the input of another device. The communication conduits between devices are graphically depicted by means of continuous lines.

The production plant of the embodiment has a single output on the basis of which it is possible to measure the obtained product flow. In this embodiment, the target variable is precisely this parameter, the obtained product flow.

The industrial plant comprises transducers which allow measuring variables such as pressure, temperature, flow, etc. at specific points. These points of measurement are graphically depicted by means of black circles with a small diameter at different points with respect to those which correspond to the simulation modules.

Among the set of devices of the industrial plant, a first group of devices are grouped together forming a first sub-process (SP1) depicted on the left. A second group of devices are grouped together forming a second sub-process (SP2) which contains devices shared with the first sub-process (SP2) and therefore the depictions thereof overlap.

The production process can be modified by acting on different elements, flow control valves, relays acting on heating resistors, on/off valves for the aperture or cancellation of given devices. These are only mere examples of action and are depicted by means of arrows originating in a black circle with larger dimensions than the circles in which the process values are depicted.

These examples of action correspond to actuators which receive a set point value that has been identified throughout the description as control parameters; that is, these control parameters are what modify the operating conditions of the industrial plant. At least one of these control parameters is operated by the method according to an embodiment of the invention.

This same figure shows a first rigorous simulation module (A), depicted as a rectangle having inputs on the left and outputs on the right. The inputs are the input production parameters taken as data by the simulation module, and the outputs are the output production parameters determined by the simulation module. These parameters are linked by means of dotted lines with the points of the production process where these values are read or determined.

During a simulation, the input values are read in variables which store the corresponding value, and during and after the simulation, the values determined at the output write said value in the storage variable. Before starting the simulation, the input values can come from the industrial plant through sensors and transducers which measure the real value of the production parameter.

The aspects of storage in variables described in the rigorous simulation module (A) apply *mutatis mutandis* to the storage of production parameters used by the predictive simulation module (B) or the expert simulation module (C) described below.

On the right of the rigorous simulation module (A), there is depicted a predictive simulation module (B), also with the input of input production parameters, in this case with a lower number of parameters, and with an output of output production parameters. The input production parameters are shown on the left and the output production parameters determined by the predictive simulation module (B) are shown on the right.

In the lower part of the figure there is shown an expert simulation module (C), where, in this case, it also comprises inputs of input production parameters depicted on the left, and shows two outputs on the right which, in this module, correspond to control parameters the action of which modifies the behavior of the production process.

In addition to these two control parameters, the industrial plant shows the rest of the control parameters on which the method acts through its iterative process, which searches for the set of control parameters which make the function to be optimized reach a maximum or be above a pre-established optimal value.

It has been indicated throughout the description that the function to be optimized is such that the problem seeks for said function to reach a maximum value or an optimal value. The very same optimization problem may be formulated in terms of another function which is minimized, where a minimum or being below a given pre-established value is now sought. In these cases, it is considered that it is an equivalent formulation, and therefore said manner of approaching the same problem will not be described.

According to this embodiment, the rigorous simulation module (A), the predictive simulation module (B), and the expert simulation module (C) are instantiated, with instantiating being understood as being provided with the computational resources needed for said modules to operate: at least the memory resources for all the values it must store, as well as the methods which allow the simulation according to each module, and the methods which allow reading the input signals of the input production parameters and providing output signals of the output production parameters. The signals allow communication between modules, and when the method acts directly on the production process and not only as a simulation, it acts on the physical devices adapted for receiving the control parameters so that they can adopt the received set point values. As described above, the output signals are operations of writing over variables of the complete numerical model.

After instantiating the simulation modules, said simulation modules are populated with the values needed for the simulation to be specific to the sub-processes they must simulate. Furthermore, the modules receive the values of the input production parameters which correspond to the values measured in the industrial plant.

If the method is going to carry out a simulation, this data is used during the simulation and can be modified during the optimization process. When one or more production parameters correspond with one or more control parameters, they are not used as control parameters of the industrial plant but rather are the values determined at the end of the calculation process.

When the computational system in charge of implementing the method according to any of the embodiments of the invention operates in simulation mode, all the parameters that are determined allow analyzing the plant with optimal conditions. When the same system changes the operating mode and becomes a control system and it is not a simulation, the control parameters are transmitted, acting on the specific actuators such that the industrial plant transitions to operating under the new conditions established through the control parameters. In this case, the industrial plant has an adaptation time showing a transient behavior which is identified by observing the evolution of the production parameters in two different time instants.

It can be observed in Figure 1 that the rigorous simulation module (A) has output production parameters in devices which in turn serve as input of the predictive simulation module (B). The same may occur with respect to the output production parameters of the predictive simulation module (B) which may be writing data, which are also output production parameters of the rigorous simulation module (A), or have an influence on the other module (B).

The manner of finding a simulation in which the instantiated modules (A, B, C) have reconciled or compatible common values is by means of an iterative process. To use a real example, in a crude oil tower the simulation needs the return temperature data of the lateral recycle to the tower for its internal calculation, whereas the predictive simulation module (B) is in charge of calculating these values by taking the data previously given by the simulation of processes for the recycle flow and the recycle input temperature. This mechanism of reconciling calculated values is performed iteratively between the instantiated models until the discrepancy between them is below a pre-established threshold. When the values common to two or more modules coincide or their discrepancy is below the threshold value it is considered that the iterative process has converged.

If a control parameter changes, then the instantiated simulation modules (A, B, C) must once again search for the set of production parameters which once again make convergence exist, with the understanding that the simulation modules are correctly representing the production process for the new combination of control parameters.

The optimization process searches throughout the entire search space for the combination of control parameters which make the target function reach a maximum value or at least a pre-established optimal value.

The optimization process according to this embodiment is an iterative process, wherein each change of a control parameter in the process of searching for the point of the search space which gives rise to the optimal value, gives rise to a nested iterative process for reconciling the values of the simulation modules.

If, instead of operating in simulation mode, the control parameters making the target function reach the optimal value are applied to the production process of the plant, then the method acts as a control method. The operating conditions of the production process are modified and said process evolves. The degree of deviation of the set of production parameters of the simulation with respect to the set of production parameters measured directly on the real industrial process can be expressed by vectors, wherein each component of the vector is a specific production parameter. The degree of separation of the real production process with respect to the simulated production process is measurable in a predetermined norm.

In this embodiment, the vector which determines the degree of deviation of the values of the production parameters from the simulated values is called **$BIAS_i$**, and it is the difference between the value measured in the production process and the value established in the simulation by means of simulation modules (A, B, C) :

$$BIAS_i = VALUE_i - SIM_i$$

wherein subscript i denotes a specific parameter among those used in the comparison.

The **$BIAS_i$** vector may be equivalently computed by swapping the variables **$VALUE_i$** and **$SIM_i$** giving

rise to the equation **$BIAS_i = SIM_i - VALUE_i$**. These two expressions being considered as equivalent, especially if the value of interest is the ‖**$BIAS$**‖ norm for a pre-established norm.

In an ideal case, the industrial process evolves towards the optimal value pre-established by the method, but this may not be the case. According to one embodiment, the method monitors the evolution of the production parameters in two different time windows.

In order to determine if the process of the industrial plant is in steady state or transient state, the reading of production parameters is carried out at two time intervals corresponding to time intervals in which there are provided historical data values relative to the operative state of the plant, a first current time interval and a second past time interval, and two comparisons are carried out:

- a first comparison where the maximum difference between the production parameters read and the historical parameters in the first time interval is established; and
- a second comparison where the maximum difference between the production parameters read and the historical parameters in the second time interval is established.

These measurements are used to estimate various possible situations of the industrial process:

- if the difference of the first comparison and second comparison is below a given threshold value it is determined that the process is in steady state;
- if the difference of the first comparison or the second comparison or both is greater than said threshold value it is determined that the process is in transient state.

Furthermore, it is also possible to determine from the same measurements the conditions of the transient state:

- if the difference of the first comparison is below a given threshold value and the difference of the second comparison is greater than said threshold value, it is then determined that the process is in transient state but is stabilizing;
- if the difference of the first comparison is above a given threshold value and the difference of the second comparison is below said threshold value, it is then determined that the process is in transient state and it is considered that the production process is destabilizing.

When the state is transient but stabilizing, readings are maintained until the state that is determined is the steady state.

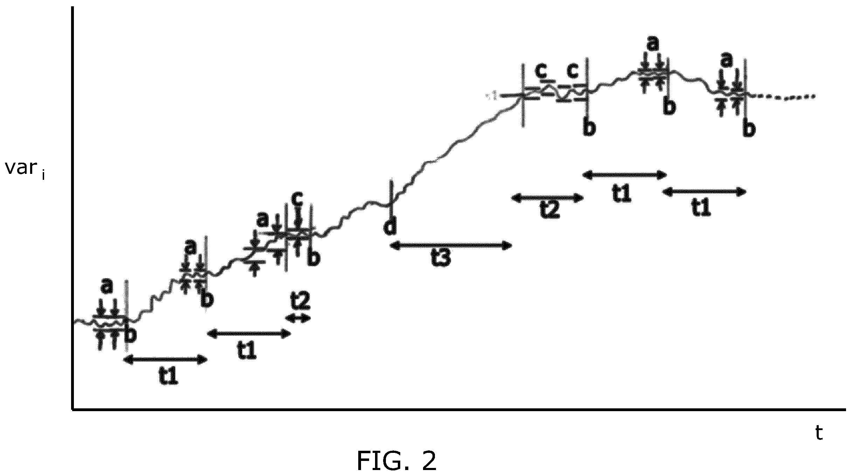

Figure 2 schematically shows an example of the evolution of one of the variables used for observing the value it takes in the production process, when the method according to an embodiment of the invention according to different calculation situations is being used.

The places on the graph identified with the letter "a" represent the calculation that is performed so as to detect that the plant is in steady state. In these places that are marked, the difference is within the configured ranges and the optimization method can progress.

In the place on the graph where the letter "b" is shown, there is depicted the moment in which a routine execution of the optimization method takes place, acting on the real control parameters of the plant, that is, acting on the industrial plant, once it has been detected that the plant is in steady state.

The places on the graph where the letter "c" is shown represent the checks taking place for detecting the steady state when, for any reason, the plant was not in said state. For example, this may occur if the plant had not reached the steady state once the changes were performed, or if the operator manually provokes a modification of the set point values of given control parameters and the production process was still in the process of stabilizing. When this occurs, according to this embodiment at the points marked with the letter "c", the method is restarted with a greater frequency than the routine execution until finding the steady state.

In the place on the where the letter "d" is shown, there is a change in conditions that is imposed, for example, by a change in feed to the plant and there is previously a simulation with the new operating conditions (pre-loading simulation). The moment in which this situation takes place is marked by a signal, usually an action of the Operator and information indicator in the plant.

Time interval $t_1$ represents the normal programmed execution frequency of the optimization method acting on the production process and depends on the conditions under which the plant normally recovers the steady state after a change in conditions. For example, in a crude oil tower this value can be about three hours.

Time interval $t_2$ represents the time in which the method for monitoring the evolution of the production parameters is executed again to verify that a steady state has been reached. This value is normally much smaller than value $t_1$. For example, in a crude oil tower $t_2$ is fifteen minutes.

Time interval $t_3$ represents the situation in which a change in operating conditions has been activated, for example, because the control parameters have been modified. This is the case, for example, when changing the type of load. The duration of this time is fixed by the speed of the change in production parameters, with the time being that corresponding to the rate of change in the production parameter with a lower speed of the change. For example, in a crude oil unit this time can be three to six hours for a change in crude oil. Once the values have reached their stable value, steady state checks are performed so as to proceed to executing the optimization method, that is, the one identified with the letter "c" above.

## Claims

1. A computer-implemented method for determining an optimal operative state of a production process of an industrial plant by a data processing system for processing data coming from said industrial plant, comprising:

   - a rigorous simulation module (A) configured for the numerical resolution of a *rigid model of equations* by modeling at least one part of the production process, such that one or more output production parameters are provided from one or more input production parameters;
   - a predictive simulation module (B) based on models of *machine learning* configured such that one or more output production parameters are provided from one or more input production parameters; and
   - an expert simulation module (C) comprising a model formed by a *set of* pre-established *rules of action* concerning the continuous process of the industrial plant such that one or more control parameters over at least one production sub-process according to at least one measurable condition of the production parameters of the process or sub-process are provided from one or more input production parameters;
   wherein the continuous process of the industrial plant comprises a set of sub-processes, and wherein each simulation module (A, B, C) is configured for carrying out the reading of its input production parameters of at least one production sub-process and providing its output production parameters,
   and wherein the production process of the plant comprises a set of control parameters for acting on one or more production parameters, wherein the method comprising the steps of:

   a) populating at least one rigid model of equations, at least one model of machine learning with the properties of the sub-processes they are modeling and/or the set of pre-established rules of action for those models by modeling the processes and sub-processes;
   b) determining a target function the maximum of which coincides with the optimal operative state of the production process and depends on at least one production parameter;
   c) instantiating two or more of the simulation modules (A, B, C) wherein

the first instantiated simulation module (A, B, C) models a sub-process with a first set of variables corresponding to production parameters, and
the second instantiated simulation module (A, B, C) models a sub-process of the industrial plant modeled by a second model different from the first model with a second set of variables corresponding to production parameters;
wherein the rigorous simulation module (A) and the predictive simulation module (B) act on different overlapping sub-processes, and wherein the expert simulation module (C) can act on any of the sub-processes; and
wherein the sub-processes overlap in that at least one production parameter of the production process is common to two or more production parameters of different simulation modules (A, B, C);

d) carrying out the simulation of the production process by means of instantiated simulation modules (A, B, C) determining the values of the production parameters by applying an iterative process where convergence is reached when:

- the production parameters, or a production parameter and a control parameter, when they are common to two or more modules, have a discrepancy error below a pre-established threshold value, and
- the target function reaches a maximum value or at least a pre-established optimal value,

wherein step d) is carried out by means of two nested iterative processes:

- a first iterative process for optimizing control parameters for determining the values of said parameters for which the target function reaches a maximum value or at least a pre-established optimal value, and
- for each iteration of the first iterative process a second iterative process for determining the production parameters, or a production parameter and a control parameter, when they are common to two or more modules, iterating until the latter have a discrepancy error between the values determined by different simulation modules (A, B, C) below a pre-established threshold value; and

e) providing the set of control parameters which determine the optimal operative state generated in the simulation.

2. The method according to claim 1, wherein at least one production parameter of the production process is read when said process is being carried out.

3. The method according to claim 1 or 2, wherein the set of control parameters determined in step e) are applied to the production process of the industrial plant.

4. The method according to any of the preceding claims, wherein before the simulation, it is further determined if the process of the industrial plant is in steady state or transient state by means of the reading of production parameters in two time intervals corresponding to time intervals in which there are provided historical data values relative to the operative state of the plant, a first current time interval and a second past time interval, and two comparisons are carried out:

- a first comparison where the maximum difference between the production parameters read and the historical parameters in the first time interval is established; and
- a second comparison where the maximum difference between the production parameters read and the historical parameters in the second time interval is established;

wherein

- if the difference of the first comparison and second comparison is below a given threshold value it is determined that the process is in steady state; and
- if the difference of the first comparison or the second comparison or both is greater than said threshold value it is determined that the process is in transient state.

5. The method according to claim 4, wherein if the identification of the process is that of being a transient state the reading of production parameters and the subsequent comparison thereof with historical parameters is then maintained until the steady state is determined.

6. The method according to any of the preceding claims, wherein there is determined a set of production parameters which can be represented by means of a **BIAS** vector, which represents the difference between the real value which can be represented by means of a *VALUE* vector, wherein each component is a measurement of the continuous process of the industrial plant, and the corresponding simulated value *SIM* thereof, wherein:

$$BIAS_i = VALUE_i - SIM_i$$

wherein subscript i identifies a specific production parameter.

7. The method according to claim 4, wherein for determining the degree of separation between the production process and the simulated process measurement is performed in $\|BIAS\|$ norm for a pre-established norm, preferably the weighted norm:

$$\|BIAS\| = \sum_i |BIAS_i \cdot w_i|$$

wherein $w_i > 0$ is a specific weight for each component.

8. The method according to any of claims 1 to 6, wherein the method further comprises a learning sub-step of the predictive simulation module (B) for the simulation of a sub-process, this step comprising:

   - determination of a rigid model of simulation of the sub-process;
   - identification of variables of the rigid model which correspond to input production parameters of the predictive simulation module (B), parameters X;
   - identification of variables of the rigid model which correspond to output production parameters of the predictive simulation module (B), parameters Y;
   - wherein learning is established by taking parameters X as input parameters and parameters Y as output parameters of the predictive simulation module (B) during a simulation with the rigid module of the sub-process.

9. The method according to claim 7, wherein the training step and the simulation are executed concurrently.

10. The method according to any of claims 1 to 8, wherein between the rigorous simulation module (A), predictive simulation module (B) and/or expert system module (C) there is communication for the exchange of signals, data, or both, wherein this communication is wireless.

11. The method according to any of the preceding claims, wherein in the expert simulation module (C), the action conditional to the production parameters depends on at least one conditional parameter which establishes whether the application of the rule is during the simulation or, alternatively, after the simulation.

12. The method according to any of the preceding claims, wherein the action to be taken by the expert system module (C) based on the at least one rule of action is:

   - the generation of a warning message to be emitted through a user interface;
   - the modification in the control parameters in the simulation, preferably establishing higher or lower levels with respect to control parameters;
   - the stopping of a rigorous simulation module (A) and instantiation of an alternative rigorous simulation module (A); or
   - the stopping of a predictive simulation module (B) and instantiation of an alternative predictive simulation module (B); or
   - several of the preceding actions.

13. The method according to any of the preceding claims and claim 3, wherein the rule of action of the expert system module (C) depends on at least one component of the *BIAS* vector.

14. The method according to claim 12, wherein the pre-established rule of action is a message to the user containing an action recommendation.

15. The method according to any of the preceding claims, wherein in step c), the instantiated simulation modules are at least one rigorous simulation module (A) and a predictive simulation module (B).

16. The method according to claim 4 and any of the preceding claims, wherein if the process is in a transient state, the method further comprises the steps of:

   - if the difference of the first comparison is below a given threshold value but the difference of the second comparison is above said threshold value, it is then established as the state of the simulation that said simulation is stabilizing, such that execution of the simulation is stopped pending steady state conditions in the production process.

17. A data processing system for the control of a production process of an industrial plant, wherein the system comprises:

   - a central processing unit;

- one or more input lines in communication with the central processing unit for the reading of production parameters;
- one or more output lines in communication with the central processing unit for the action on the production process by means of control parameters;

wherein the central processing unit is configured for reading production parameters through the input lines, carrying out a method according to any of claims 1 to 15, and controlling the production process by means of the control parameters transmitted through output lines.

18. The data processing system according to claim 17, wherein the central processing unit carries out a reading of the production parameters in a pre-established time interval determining, either manually or automatically, if it is to operate only to determine control parameters or to apply said control parameters modifying the behavior of the industrial plant.

## Patentansprüche

1. Ein computerimplementiertes Verfahren zum Bestimmen eines optimalen Betriebszustands eines Produktionsprozesses einer industriellen Anlage durch ein Datenverarbeitungssystem zum Verarbeiten von Daten, die von der industriellen Anlage stammen, umfassend:

- ein rigoroses Simulationsmodul (A), das zur numerischen Lösung eines *starren Gleichungsmodells* durch Modellierung zumindest eines Teils des Produktionsprozesses eingerichtet ist, derart, dass ein oder mehrere Ausgangsproduktionsparameter aus einem oder mehreren Eingangsproduktionsparametern bereitgestellt werden;
- ein prädiktives Simulationsmodul (B) basierend auf Modellen des *maschinellen Lernens,* das derart eingerichtet ist, dass ein oder mehrere Ausgangsproduktionsparameter aus einem oder mehreren Eingangsproduktionsparametern bereitgestellt werden; und
- ein Experten-Simulationsmodul (C), das ein Modell umfasst, das aus einem *Satz* von vorherbestimmten *Aktionsregeln* in Bezug auf den kontinuierlichen Prozess der industriellen Anlage gebildet ist, derart, dass ein oder mehrere Steuerparameter über zumindest einen Produktionsteilprozess gemäß zumindest einer messbaren Bedingung der Produktionsparameter des Prozesses oder Teilprozesses aus einem oder mehreren Eingangsproduktionsparametern bereitgestellt werden;

wobei der kontinuierliche Prozess der industriellen Anlage einen Satz von Teilprozessen umfasst, und

wobei jedes Simulationsmodul (A, B, C) zum Ausführen des Einlesens seiner Eingangsproduktionsparameter von zumindest einem Produktionsteilprozess und zum Bereitstellen seiner Ausgangsproduktionsparameter eingerichtet ist,

und wobei der Produktionsprozess der Anlage einen Satz von Steuerparametern zum Einwirken auf einen oder mehrere Produktionsparameter umfasst,

wobei das Verfahren die Schritte umfasst:

a) befüllen zumindest eines starren Gleichungsmodells, zumindest eines Modells des maschinellen Lernens mit den Eigenschaften der Teilprozesse, die sie modellieren, und/oder des Satzes von vorherbestimmten Aktionsregeln für diese Modelle durch Modellierung der Prozesse und Teilprozesse;

b) bestimmen einer Zielfunktion, deren Maximum mit dem optimalen Betriebszustand des Produktionsprozesses übereinstimmt und von zumindest einem Produktionsparameter abhängt;

c) instanziieren von zwei oder mehr der Simulationsmodule (A, B, C), wobei

das erste instanziierte Simulationsmodul (A, B, C) einen Teilprozess mit einem ersten Satz von Variablen modelliert, die Produktionsparametern entsprechen, und

das zweite instanziierte Simulationsmodul (A, B, C) einen Teilprozess der industriellen Anlage modelliert, der durch ein zweites Modell modelliert wird, das sich von dem ersten Modell unterscheidet, mit einem zweiten Satz von Variablen, die Produktionsparametern entsprechen;

wobei das rigorose Simulationsmodul (A) und das prädiktive Simulationsmodul (B) auf verschiedene sich überlappende Teilprozesse einwirken, und wobei das Experten-Simulationsmodul (C) auf jeden der Teilprozesse einwirken kann; und

wobei sich die Teilprozesse dadurch überlappen, dass zumindest ein Produktionsparameter des Produktionsprozesses zwei oder mehr Produktionsparametern verschiedener Simulationsmodule (A, B, C) gemeinsam ist;

d) ausführen der Simulation des Produktionsprozesses mittels der instanziierten Simulationsmodule (A, B, C), welche die Werte der Produktionsparameter durch Anwenden eines iterativen Prozesses bestimmen, bei dem Konvergenz erreicht ist, wenn:

- die Produktionsparameter, oder ein Produktionsparameter und ein Steuerparameter, wenn sie zwei oder mehr Modulen gemeinsam sind, einen Abweichungsfehler unterhalb eines vorherbestimmten Schwellwerts aufweisen, und
- die Zielfunktion einen Maximalwert oder zumindest einen vorherbestimmten Optimalwert erreicht,

wobei Schritt d) mittels zweier verschachtelter iterativer Prozesse ausgeführt wird:

- eines ersten iterativen Prozesses zum Optimieren der Steuerparameter zum Bestimmen der Werte der Parameter, für die die Zielfunktion einen Maximalwert oder zumindest einen vorherbestimmten Optimalwert erreicht, und
- für jede Iteration des ersten iterativen Prozesses eines zweiten iterativen Prozesses zum Bestimmen der Produktionsparameter, oder eines Produktionsparameters und eines Steuerparameters, wenn sie zwei oder mehr Modulen gemeinsam sind, wobei iteriert wird, bis letztere einen Abweichungsfehler zwischen den von verschiedenen Simulationsmodulen (A, B, C) bestimmten Werten unterhalb eines vorherbestimmten Schwellwerts aufweisen; und

e) bereitstellen des Satzes von Steuerparametern, die den in der Simulation erzeugten optimalen Betriebszustand bestimmen.

2. Das Verfahren nach Anspruch 1, wobei zumindest ein Produktionsparameter des Produktionsprozesses eingelesen wird, wenn der Prozess ausgeführt wird.

3. Das Verfahren nach Anspruch 1 oder 2, wobei der in Schritt e) bestimmte Satz von Steuerparametern auf den Produktionsprozess der industriellen Anlage angewendet wird.

4. Das Verfahren nach einem der vorstehenden Ansprüche, wobei vor der Simulation ferner bestimmt wird, ob sich der Prozess der industriellen Anlage in einem stationären Zustand oder in einem transienten Zustand befindet, mittels des Einlesens der Produktionsparameter in zwei Zeitintervallen, die Zeitintervallen entsprechen, in denen historische Datenwerte bezüglich des Betriebszustands der Anlage bereitgestellt sind, und zwar einem ersten aktuellen Zeitintervall und einem zweiten zurückliegenden Zeitintervall, und wobei zwei Vergleiche durchgeführt werden:

- ein erster Vergleich, bei dem die maximale Differenz zwischen den eingelesenen Produktionsparametern und den historischen Parametern in dem ersten Zeitintervall ermittelt wird; und
- ein zweiter Vergleich, bei dem die maximale Differenz zwischen den eingelesenen Produktionsparametern und den historischen Parametern in dem zweiten Zeitintervall ermittelt wird;

wobei

- wenn die Differenz zwischen dem ersten Vergleich und dem zweiten Vergleich unterhalb eines vorgegebenen Schwellwerts liegt, bestimmt wird, dass sich der Prozess im stationären Zustand befindet; und
- wenn die Differenz des ersten Vergleichs oder des zweiten Vergleichs oder beider größer als der Schwellwert ist, bestimmt wird, dass sich der Prozess im transienten Zustand befindet.

5. Das Verfahren nach Anspruch 4, wobei, wenn die Identifizierung des Prozesses die eines transienten Zustands ist, das Einlesen der Produktionsparameter und der anschließende Vergleich davon mit historischen Parametern dann aufrechterhalten wird, bis der stationäre Zustand bestimmt ist.

6. Das Verfahren nach einem der vorstehenden Ansprüche, wobei ein Satz von Produktionsparametern bestimmt wird, der mittels eines BIAS-Vektors dargestellt werden kann, der die Differenz zwischen dem realen Wert, der mittels eines VALUE-Vektors dargestellt werden kann, wobei jede Komponente eine Messung des kontinuierlichen Prozesses der industriellen Anlage ist, und dem entsprechenden simulierten Wert *SIM* davon darstellt, wobei:

$$BIAS_i = VALUE_i - SIM_i$$

wobei der Index i einen bestimmten Produktionsparameter kennzeichnet.

7. Das Verfahren nach Anspruch 4, wobei zum Bestimmen des Grades der Trennung zwischen dem Produktionsprozess und dem simulierten Prozess eine Messung in einer ‖*BIAS*‖-Norm für eine vorherbestimmte Norm, vorzugsweise die gewichtete Norm:

$$\|BIAS\| = \sum_i |BIAS_i \cdot w_i|$$

, durchgeführt wird, wobei $w_i > 0$ ein spezifisches Gewicht für jede Komponente ist.

**8.** Das Verfahren nach einem der Ansprüche 1 bis 6, wobei das Verfahren ferner einen Lern-Teilschritt des prädiktiven Simulationsmoduls (B) für die Simulation eines Teilprozesses umfasst, wobei dieser Schritt umfasst:

- Bestimmung eines starren Simulationsmodells des Teilprozesses;
- Identifizierung von Variablen des starren Modells, die Eingangsproduktionsparametern des prädiktiven Simulationsmoduls (B) entsprechen, Parameter X;
- Identifizierung von Variablen des starren Modells, die Ausgangsproduktionsparametern des prädiktiven Simulationsmoduls (B) entsprechen, Parameter Y;
- wobei ein Lernen durch Verwenden der Parameter X als Eingangsparameter und Parameter Y als Ausgangsparameter des prädiktiven Simulationsmoduls (B) während einer Simulation mit dem starren Modul des Teilprozesses erfolgt.

**9.** Das Verfahren nach Anspruch 7, wobei der Trainingsschritt und die Simulation gleichzeitig ausgeführt werden.

**10.** Das Verfahren nach einem der Ansprüche 1 bis 8, wobei zwischen dem rigorosen Simulationsmodul (A), dem prädiktiven Simulationsmodul (B) und/oder dem Experten-Systemmodul (C) eine Kommunikation zum Austausch von Signalen, Daten oder beidem besteht, wobei diese Kommunikation drahtlos ist.

**11.** Das Verfahren nach einem der vorstehenden Ansprüche, wobei in dem Experten-Simulationsmodul (C) die von den Produktionsparametern abhängige Aktion von zumindest einem Bedingungsparameter abhängt, der bestimmt, ob die Anwendung der Regel während der Simulation oder alternativ nach der Simulation erfolgt.

**12.** Das Verfahren nach einem der vorstehenden Ansprüche, wobei die von dem Experten-Systemmodul (C) basierend auf der zumindest einen Aktionsregel auszuführende Aktion ist:

- die Erzeugung einer Warnmeldung, die über eine Benutzerschnittstelle ausgegeben wird;
- die Modifizierung der Steuerparameter in der Simulation, vorzugsweise durch Bestimmen höherer oder niedrigerer Werte in Bezug auf die Steuerparameter;
- das Anhalten eines rigorosen Simulationsmoduls (A) und Instanziierung eines alternativen rigorosen Simulationsmoduls (A); oder
- das Anhalten eines prädiktiven Simulationsmoduls (B) und Instanziierung eines alternativen prädiktiven Simulationsmoduls (B); oder
- mehrere der vorstehenden Aktionen.

**13.** Das Verfahren nach einem der vorstehenden Ansprüche und Anspruch 3, wobei die Aktionsregel des Experten-Systemmoduls (C) von zumindest einer Komponente des BIAS-Vektors abhängt.

**14.** Das Verfahren nach Anspruch 12, wobei die vorherbestimmte Aktionsregel eine Nachricht an den Benutzer ist, die eine Aktionsempfehlung enthält.

**15.** Das Verfahren nach einem der vorstehenden Ansprüche, wobei in Schritt c) die instanziierten Simulationsmodule zumindest ein rigoroses Simulationsmodul (A) und ein prädiktives Simulationsmodul (B) sind.

**16.** Das Verfahren nach Anspruch 4 und einem der vorstehenden Ansprüche, wobei, wenn sich der Prozess in einem transienten Zustand befindet, das Verfahren ferner die folgenden Schritte umfasst:

- wenn die Differenz des ersten Vergleichs unterhalb eines vorgegebenen Schwellwerts liegt, die Differenz des zweiten Vergleichs jedoch oberhalb des Schwellwerts liegt, wird dann als Zustand der Simulation bestimmt, dass sich die Simulation stabilisiert, derart, dass eine Ausführung der Simulation angehalten wird, solange stationäre Bedingungen in dem Produktionsprozess ausstehen.

**17.** Das Datenverarbeitungssystem für die Steuerung eines Produktionsprozesses einer industriellen Anlage, wobei das System umfasst:

- eine zentrale Verarbeitungseinheit;
- eine oder mehrere Eingangsleitungen in Kommunikation mit der zentralen Verarbeitungseinheit für das Einlesen von Produktionsparametern;
- eine oder mehrere Ausgangsleitungen in Kommunikation mit der zentralen Verarbeitungseinheit für das Einwirken auf den Produktionsprozess mittels Steuerparametern;

wobei die zentrale Verarbeitungseinheit zum Einlesen von Produktionsparametern über die Eingangsleitungen, zum Ausführen eines Verfahrens nach einem der Ansprüche 1 bis 15, und zum Steuern des Produktionsprozesses mittels der über Ausgangsleitungen übertragenen Steuerparameter eingerichtet ist.

18. Das Datenverarbeitungssystem nach Anspruch 17, wobei die zentrale Verarbeitungseinheit ein Einlesen der Produktionsparameter in einem vorherbestimmten Zeitintervall ausführt, um entweder manuell oder automatisch zu bestimmen, ob sie nur zum Bestimmen von Steuerparametern oder zum Anwenden der Steuerparameter, die das Verhalten der industriellen Anlage modifizieren, betrieben werden soll.

**Revendications**

1. Procédé mis en œuvre par ordinateur pour déterminer un état opérationnel optimal d'un processus de production d'une installation industrielle par un système de traitement de données pour traiter des données provenant de ladite installation industrielle, comprenant :

   - un module (A) de simulation rigoureuse configuré pour la résolution numérique d'un *modèle rigide d'équations* en modélisant au moins une partie du processus de production, de sorte qu'un ou plusieurs paramètres de production de sortie soient fournis à partir d'un ou de plusieurs paramètres de production d'entrée ;
   - un module (B) de simulation prédictive basé sur des modèles *d'apprentissage automatique* configurés de sorte qu'un ou plusieurs paramètres de production de sortie soient fournis à partir d'un ou plusieurs paramètres de production d'entrée ; et
   - un module (C) de simulation expert comprenant un modèle constitué d'un *ensemble de règles d'action* préétablies concernant le processus continu de l'installation industrielle, de sorte qu'un ou plusieurs paramètres de commande sur au moins un sous-processus de production selon au moins une condition mesurable des paramètres de production du processus ou du sous-processus soient fournis à partir d'un ou plusieurs paramètres de production d'entrée ;

      dans lequel le processus continu de l'installation industrielle comprend un ensemble de sous-processus, et dans lequel chaque module (A, B, C) de simulation est configuré pour réaliser la lecture de ses paramètres de production d'entrée d'au moins un sous-processus de production et fournir ses paramètres de production de sortie,
   et dans lequel le processus de production de l'installation comprend un ensemble de paramètres de commande pour agir sur un ou plusieurs paramètres de production, dans lequel le procédé comprenant les étapes consistant à :

      a) remplir au moins un modèle rigide d'équations, au moins un modèle d'apprentissage automatique avec les propriétés des sous-processus qu'ils modélisent et/ou l'ensemble de règles d'action préétablies pour ces modèles en modélisant les processus et les sous-processus ;
      b) déterminer une fonction cible dont le maximum coïncide avec l'état opérationnel optimal du processus de production et dépend d'au moins un paramètre de production ;
      c) instancier deux des modules (A, B, C) de simulation ou plus, dans lesquels

         le premier module (A, B, C) de simulation instancié modélise un sous-processus avec un premier ensemble de variables correspondant à des paramètres de production, et
         le deuxième module (A, B, C) de simulation instancié modélise un sous-processus de l'installation industrielle modélisé par un second modèle différent du premier modèle avec un second ensemble de variables correspondant à des paramètres de production ;
         dans lequel le module (A) de simulation rigoureuse et le module (B) de simulation prédictive agissent sur différents sous-processus se chevauchant, et dans lequel le module (C) de simulation expert peut agir sur l'un quelconque des sous-processus ; et
         dans lequel les sous-processus se chevauchent en ce qu'au moins un paramètre de production du processus de production est commun à deux paramètres de production ou plus de différents modules (A, B, C) de simulation ;

      d) réaliser la simulation du processus de production au moyen de modules (A, B, C) de simulation instanciés déterminant les valeurs des paramètres de production en appliquant un processus itératif où la convergence est atteinte lorsque :

    - les paramètres de production, ou un paramètre de production et un paramètre de commande, lorsqu'ils sont communs à deux modules ou plus, ont une erreur de divergence sous une valeur seuil préétablie, et
    - la fonction cible atteint une valeur maximale ou au moins une valeur optimale préétablie,

dans lequel l'étape d) est réalisée au moyen de deux processus itératifs imbriqués :

    - un premier processus itératif pour optimiser des paramètres de commande pour déterminer les valeurs desdits paramètres pour lesquelles la fonction cible atteint une valeur maximale ou au moins une valeur optimale préétablie, et
    - pour chaque itération du premier processus itératif, l'itération d'un second processus itératif pour déterminer les paramètres de production, ou un paramètre de production et un paramètre de commande, lorsqu'ils sont communs à deux modules ou plus, jusqu'à ce que ces derniers aient une erreur de divergence entre les valeurs déterminées par différents modules (A, B, C) de simulation sous une valeur seuil préétablie ; et

e) fournir l'ensemble de paramètres de commande qui détermine l'état opérationnel optimal généré dans la simulation.

**2.** Procédé selon la revendication 1, dans lequel au moins un paramètre de production du processus de production est lu lorsque ledit processus est réalisé.

**3.** Procédé selon la revendication 1 ou 2, dans lequel l'ensemble de paramètres de commande déterminé à l'étape e) est appliqué au processus de production de l'installation industrielle.

**4.** Procédé selon l'une quelconque des revendications précédentes, dans lequel, avant la simulation, il est en outre déterminé si le processus de l'installation industrielle est dans un état stable ou un état transitoire au moyen de la lecture de paramètres de production dans deux intervalles de temps correspondant à des intervalles de temps dans lesquels sont fournies des valeurs de données historiques relatives à l'état opérationnel de l'installation, un premier intervalle de temps courant et un second intervalle de temps passé, et deux comparaisons sont réalisées :

    - une première comparaison où la différence maximale entre les paramètres de production lus et les paramètres historiques dans le premier intervalle de temps est établie ; et
    - une seconde comparaison où la différence maximale entre les paramètres de production lus et les paramètres historiques dans le second intervalle de temps est établie ; dans lequel
    - si la différence de la première comparaison et de la seconde comparaison est sous une valeur seuil donnée, il est déterminé que le processus est dans un état stable ; et
    - si la différence de la première comparaison, de la seconde comparaison ou des deux est supérieure à ladite valeur seuil, il est déterminé que le processus est dans un état transitoire.

**5.** Procédé selon la revendication 4, dans lequel, si l'identification du processus est d'être un état transitoire, la lecture de paramètres de production et la comparaison ultérieure de ceux-ci avec des paramètres historiques sont alors maintenues jusqu'à ce que l'état stable soit déterminé.

**6.** Procédé selon l'une quelconque des revendications précédentes, dans lequel un ensemble de paramètres de production est déterminé qui peut être représenté au moyen d'un vecteur *BIAS,* qui représente la différence entre la valeur réelle qui peut être représentée au moyen d'un vecteur *VALUE,* dans lequel chaque composante est une mesure du processus continu de l'installation industrielle, et la valeur simulée *SIM* correspondante de ceux-ci, dans lequel :

$$BIAS_i = VALUE_i - SIM_i$$

dans lequel l'indice i identifie un paramètre de production spécifique.

**7.** Procédé selon la revendication 4, dans lequel, pour déterminer le degré de séparation entre le processus de production et le processus simulé, une mesure est effectuée avec une norme $\|BIAS\|$ pour une norme préétablie, de préférence la norme pondérée :

$$\|BIAS\| = \sum_i |BIAS_i \cdot w_i|$$

dans lequel $w_i > 0$ est un poids spécifique pour chaque composante.

8. Procédé selon l'une quelconque des revendications 1 à 6, dans lequel le procédé comprend en outre une sous-étape d'apprentissage du module (B) de simulation prédictive pour la simulation d'un sous-processus, cette sous-étape comprenant :

- la détermination d'un modèle rigide de simulation du sous-processus ;
- l'identification de variables du modèle rigide qui correspondent à des paramètres de production d'entrée du module (B) de simulation prédictive, paramètres X ;
- l'identification de variables du modèle rigide qui correspondent à des paramètres de production de sortie du module (B) de simulation prédictive, paramètres Y ;
- dans lequel l'apprentissage est établi en prenant les paramètres X comme paramètres d'entrée et les paramètres Y comme paramètres de sortie du module (B) de simulation prédictive pendant une simulation avec le module rigide du sous-processus.

9. Procédé selon la revendication 7, dans lequel l'étape d'apprentissage et la simulation sont exécutées simultanément.

10. Procédé selon l'une quelconque des revendications 1 à 8, dans lequel entre le module (A) de simulation rigoureuse, le module (B) de simulation prédictive et/ou le module (C) de système expert il y a une communication pour l'échange de signaux, de données ou les deux, dans lequel cette communication est sans fil.

11. Procédé selon l'une quelconque des revendications précédentes, dans lequel, dans le module (C) de simulation expert, l'action conditionnelle aux paramètres de production dépend d'au moins un paramètre conditionnel qui établit si l'application de la règle a lieu pendant la simulation ou, en variante, après la simulation.

12. Procédé selon l'une quelconque des revendications précédentes, dans lequel l'action devant être entreprise par le module (C) de système expert sur la base de l'au moins une règle d'action est :

- la génération d'un message d'avertissement devant être émis par le biais d'une interface utilisateur ;

- la modification des paramètres de commande dans la simulation, de préférence l'établissement de niveaux supérieurs ou inférieurs par rapport à des paramètres de commande ;
- l'arrêt d'un module (A) de simulation rigoureuse et l'instanciation d'une variante de module (A) de simulation rigoureuse ; ou
- l'arrêt d'un module (B) de simulation prédictive et l'instanciation d'une variante de module (B) de simulation prédictive ; ou
- plusieurs des actions précédentes.

13. Procédé selon l'une quelconque des revendications précédentes et la revendication 3, dans lequel la règle d'action du module (C) de système expert dépend d'au moins une composante du vecteur *BIAS.*

14. Procédé selon la revendication 12, dans lequel la règle d'action préétablie est un message à l'utilisateur contenant une recommandation d'action.

15. Procédé selon l'une quelconque des revendications précédentes, dans lequel, à l'étape c), les modules de simulation instanciés sont au moins un module (A) de simulation rigoureuse et un module (B) de simulation prédictive.

16. Procédé selon la revendication 4 et l'une quelconque des revendications précédentes, dans lequel, si le processus est dans un état transitoire, le procédé comprend en outre l'étape suivante :

- si la différence de la première comparaison est sous une valeur seuil donnée mais la différence de la seconde comparaison est au-dessus de ladite valeur seuil, il est alors établi comme état de la simulation que ladite simulation se stabilise, de sorte que l'exécution de la simulation soit arrêtée en attendant des conditions d'état stable dans le processus de production.

17. Système de traitement de données pour la commande d'un processus de production d'une installation industrielle, dans lequel le système comprend :

- un processeur ;
- une ou plusieurs lignes d'entrée en communication avec le processeur pour la lecture de paramètres de production ;
- une ou plusieurs lignes de sortie en communication avec le processeur pour l'action sur le processus de production au moyen de paramètres de commande ;

dans lequel le processeur est configuré pour lire des paramètres de production à travers les lignes d'entrée, réaliser un procédé selon l'une quelconque des revendications 1 à 15, et commander le processus de production au moyen des paramètres de commande transmis à travers des lignes de sortie.

18. Système de traitement de données selon la revendication 17, dans lequel le processeur réalise une lecture des paramètres de production dans un intervalle de temps préétabli déterminant, soit manuellement, soit automatiquement, s'il doit fonctionner uniquement pour déterminer des paramètres de commande ou pour appliquer lesdits paramètres de commande modifiant le comportement de l'installation industrielle.

FIG. 1

SP1

SP2

A

B

C

EP 4 081 870 B1

19

FIG. 2